# EUROPEAN PATENT SPECIFICATION

(11) **EP 0 784 352 B1**
(45) Date of publication and mention of the grant of the patent: **14.02.2001**
(21) Application number: 96922230.6
(22) Date of filing: 04.07.1996
(51) Int. Cl.: H01M 8/02

(54) **SEPARATOR FOR FUEL CELLS OF SOLID POLYELECTROLYTE TYPE AND PROCESSES OF THE PRODUCTION THEREOF**
SEPARATOR FÜR FESTSTOFFPOLYELEKTROLYTBRENNSTOFFZELLEN UND DESSEN HERSTELLUNG
SEPARATEUR POUR PILES A COMBUSTIBLE DU TYPE A POLYELECTROLYTE SOLIDE ET SES PROCEDES DE FABRICATION

(30) Priority: 05.07.1995 JP 19433395
(43) Date of publication of application: 16.07.1997
(73) Proprietor: NISSHINBO INDUSTRIES, INC., Chuo-ku, Tokyo 103 (JP)
(72) Inventor: SAITO, Kazuo, Nisshinbo Industries, Inc., Tokyo 123 (JP); HAGIWARA, Atsuchi, Nisshinbo Industries, Inc., Tokyo 123 (JP); TANNO, Fumio, Nisshinbo Industries, Inc., Tokyo 123 (JP)
(74) Representative: Laufhütte, Dieter, Dr.-Ing.
(86) International application number: JP9601859
(87) International publication number: WO9702612

(56) References cited:
- JP-A- 1 154 467
- JP-A- 1 311 570
- JP-A- 4 214 072
- JP-A- 60 090 807
- JP-A- 62 059 508
- CHEMICAL ABSTRACTS, vol. 108, no. 10, 7 March 1988 Columbus, Ohio, US; abstract no. 78141, SUZUKI, YOSHIO: "Manufacture of carbon plates" XP002105476 & JP 62 265109 A (TOKAI CARBON CO., LTD., JAPAN)
- PATENT ABSTRACTS OF JAPAN vol. 007, no. 140 (E-182), 18 June 1983 & JP 58 053167 A (TOKYO SHIBAURA DENKI KK;OTHERS: 01), 29 March 1983

## Description

### Technical Field

The present invention relates to a separator for polymer electrolyte fuel cells and processes for production thereof.

### Background Art

Fuel cells have excellent features such as (1) it is virtually unnecessary to use any fossil fuel which may be ex-hausted in a not too distant future, (2) substantially no noise is produced in electricity generation, and (3) energy recovery is high as compared with the cases of other methods of electricity generation. Therefore, utilization of fuel cells in relatively small power plants in buildings or factories is being studied.

Of fuel cells, polymer electrolyte fuel cells operate at low temperatures and have no problem of corrosion of cell parts, as compared with other types of fuel cells and, moreover, can generate a relatively large electric current at low operating temperatures. Therefore, polymer electrolyte fuel cells are drawing attention as a substitute for internal combustion engines of automobiles.

In polymer electrolyte fuel cells, the separator used therein as one component has roles of (a) providing a passage of a reactive gas fed into the fuel cell, (b) transmitting the electricity generated in the fuel cell to the outside, and (3) dissipating the heat generated in the fuel cell. In order to perform these roles, the separator must satisfy requirements of light in weight, high gas barrier property and easy cuttability for groove formation.

The separator used in polymer electrolyte fuel cells has heretofore been made of graphite impregnated with a resin (e.g. phenolic resin) or graphite having a glassy carbon layer formed thereon, in view of processability and cost.

The graphite impregnated with a resin is expensive because a step of impregnation and drying must be repeated a plurality of times in order to allow said graphite to have a desired gas barrier property. Further, said graphite has a high density because of the high density of graphite, and makes the total weight of the fuel cell large.

The graphite having a glassy carbon layer formed thereon requires a complicated process and is expensive because a step of impregnation and drying is repeated a plurality of times as in the case of the graphite impregnated with a resin and then is fired in a non-oxidizing atmosphere. Further, said graphite has a high density because of the high density of graphite, and makes the total weight of fuel cell large.

It is considered to use glassy carbon as a material for a separator, as done in phosphoric acid fuel cells. In this case, glassy carbon is lighter than graphite and the total weight of the fuel cell is small. However, glassy carbon is expensive and, moreover, fragile, making the groove formation therein very difficult and requiring a high processing cost.

Therefore, it has been necessary to develop a separator for polymer electrolyte fuel cells, which is lightweight, can be grooved easily and has a high gas barrier property.

The object of the present invention is to solve the above-mentioned problems of the prior art and provide (1) a separator for polymer electrolyte fuel cells, which is lightweight, can be grooved easily and has a high gas barrier property and (2) processes for production of such a separator.

### Disclosure of the Invention

The object of the invention is achieved with a separator having the features of claim 1 and a process having the features of one of the claims 2, 4, or 5. Preferable embodiments are the subject of the respective subclaims.

According to the present invention, there is provided a separator for polymer electrolyte fuel cells, interposed between the gas diffusion electrodes of the fuel cell and having, in at least one side, a groove for supply of an oxidizing agent or a fuel gas, which separator is made of carbon composite material comprising (a) an expanded graphite powder and (b) a thermoplastic resin or a thermosetting resin or a fired product of the thermosetting resin, and the expanded graphite powder (a) being dispersed in the component (b), wherein the expanded graphite powder has an average particle diameter of 5-12 µm and at least 80% of the total particles of the expanded graphite powder have particle diameters of 0.1-20 µm.

According to the present invention, there is further provided a process for producing a separator for polymer electrolyte fuel cells, which comprises mixing a thermosetting or thermoplastic resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C to obtain carbon composite material, and then, forming a groove for supply of an oxidizing agent or a fuel gas on at least one side of the carbon composite material.

According to the present invention, there is further provided a process for producing a separator for polymer electrolyte fuel cells, which comprises mixing a thermosetting resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C, and firing the molded material at 700-3,000°C in a non-oxidizing atmosphere to obtain carbon composite material, and then, forming a groove for supply of an oxidizing agent or a fuel gas on at least one side of the carbon composite material; or a process for producing a separator for polymer electrolyte fuel cells, which comprises mixing a thermosetting resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C to obtain a molded material, and forming a groove for supply of an oxidizing agent or a fuel gas on at least one side of the molded material, and then, firing the molded material at 700-3,000°C in a non-oxidizing atmosphere.

The present inventors made a study in order to achieve the above object and found out that expanded graphite having particular particle diameters has excellent miscibility with a thermosetting or thermoplastic resin. Based on an idea that when a mixture of such expanded graphite and a thermosetting or thermoplastic resin (they have good miscibility) is shaped, there might be obtained a separator for polymer electrolyte fuel cells, which is lightweight, can be grooved easily and has a high gas barrier property, the present inventors made a further study. As a result, the present invention has been completed.

### Best Mode for Carrying out the Invention

The present invention is hereinafter described in detail.

The expanded graphite used in the present invention has no particular restriction as to the raw material. The raw material can be any raw material ordinarily used in production of expanded graphite, such as natural graphite, pyrolytic graphite, Kish graphite or the like.

Production of expanded graphite from the above raw material can be conducted by a known process. For example, concentrated sulfuric acid is mixed with hydrogen peroxide to form peroxomonosulfuric acid; thereto is added raw material graphite with stirring to give rise to a reaction for about 1 hour to 1 day; and the reacted graphite is heated at 500-1,000°C in an inert gas.

Incidentally, the expanded graphite used in the present invention may be expanded graphite obtained by adding, in the above production of expanded graphite using concentrated sulfuric acid and hydrogen peroxide, at least one oxidizing agent selected from perchloric acid, a perchloric acid salt and ammonium hydrogenperoxodisulfate [Japanese Patent Application Kokai (Laid-Open) No. 16406/1994]. It specifically is expanded graphite obtained by adding 15% of ammonium hydrogenperoxodisulfate to a mixture of 320 parts by weight of 95 wt. % concentrated sulfuric acid and 4 parts by weight of 62% hydrogen peroxide, mixing them with cooling to 20°C or lower, adding natural graphite to the mixture to give rise to a reaction for 24 hours, and firing the reaction product up to 1,000°C in nitrogen gas.

The expanded graphite produced as above is ground and as necessary allowed to have a desired particle size and desired particle diameters. The expanded graphite used in the present invention must have an average particle diameter of 5-12 µm and at least 80% of the total particles of the graphite powder must have particle diameters of 0.1-20 µm.

When the average particle diameter of the expanded graphite used in the present invention is smaller than 5 µm, the penetration of the thermosetting or thermoplastic resin into the gap between expanded graphite particles is difficult, resulting in very low gas barrier property. When the average particle diameter is larger than 12 µm, the filling of the gap between expanded graphite particles with the thermosetting or thermoplastic resin is insufficient, resulting in (1) very low gas barrier property and (2) reduced packing density which invites insufficient electrical connection and consequent low electroconductivity.

Further, it is necessary that at least 80% of the total particles of the graphite powder used in the present invention have particle diameters of 0.1-20 µm. In general, expanded graphite which is ground and as necessary allowed to have a desired particle size and desired particle diameters, has a particle size distribution wherein the average particle diameter gives a distribution peak. In the present expanded graphite, however, when its powder total particles are measured for particle size distribution, it is necessary that at least 80% of the powder total particles have particle diameters of 0.1-20 µm and less than 20% of the powder total particles have particle diameters of smaller than 0.1 µm or larger than 20 µm.

Needless to say, in the present expanded graphite, the total powder particles may have particle diameters of 0.1-20 µm or of even narrower range.

When the peak of particle size distribution is lower, the total number of particles having particle diameters smaller than 0.1 µm and larger than 20 µm increases. When the peak of particle size distribution moves to either one direction, the number of graphite particles having particle diameters smaller than 0.1 µm or larger than 20 µm increases. When the number of particles having particle diameters smaller than 0.1 µm increases, the surface area of the expanded graphite powder increases, whereby the thickness of the resin present between the expanded graphite particles becomes smaller and the resulting separator has reduced gas barrier property. When the number of graphite particles having particle diameters larger than 20 µm increases, part of the graphite particles may be exposed at the surface of the resulting separator and the number of resin layers formed between the expanded graphite particles is small, giving a separator of low gas barrier property.

The above-mentioned grinding of expanded graphite may be conducted by any known method such as a mixer, jet mill, ball mill, pin mill, freeze-grinding or the like. Allowing ground expanded graphite to have a desired particle size and desired particle diameters can be conducted by a sieving method such as vibratory screen, Rotex screener, sonic sifter, microclassifier, forced vortex air classifier or the like.

The thermoplastic resin used in the present invention is not particularly restricted and includes known resins such as polyethylene, polystyrene, polypropylene, polymethyl methacrylate, polyethylene terephthalate, polybutylene terephthalate, polyethersulfone, polycarbonate, polyoxamethylene, polyamide, polyimide, polyamideimide, polyvinyl alcohol, polyvinyl chloride, fluororesin, polyphenylsulfone, polyether ether ketone, polysulfone, polyether ketone, polyarylate, polyetherimide, polymethylpentene and the like.

The thermosetting resin used in the present invention is not particularly restricted and includes known resins such as polycarbodiimide resin, phenolic resin, furfuryl alcohol resin, cellulose, epoxy resin, urea resin, melamine resin and the like.

The thermoplastic resin or the thermosetting resin may be used in the form of a powder or a solution in an appropriate solvent.

The separator of the present invention can be produced by making the main components, i.e. an expanded graphite powder and a resin into a composite material according to the following process.

That is, first an expanded graphite powder and a resin both mentioned above are mixed to obtain a carbon composite material. This mixing step can be conducted by an ordinary industrial method such as a stirring rod, kneader, ball mill, sample mill, mixer, static mixer, ribbon mixer or the like.

The amount ratio of expanded graphite and the resin can be determined depending upon, for example, the properties required for the intended separator. The amount ratio can be, for example, 10-1,000 parts by weight of the resin per 100 parts by weight of expanded graphite powder. When the amount of the resin is less than 10 parts by weight, the resulting separator has a reduced strength and reduced gas non-permeability. When the amount of the resin is more than 1,000 parts by weight, the resulting separator has insufficient electroconductivity.

Next, the mixture is pressurized to allow the resin component to penetrate into between the particles of the expanded graphite powder, and then the mixture is molded to obtain a carbon composite material of the present invention. This molding can be conducted by a known method such as pressure molding, hydrostatic pressure molding, extrusion molding, transfer molding, injection-pressure molding, injection molding, belting press, press heating, roll pressing or the like. In this molding, the mixture may be molded into a desired shape; or, prior to the molding, a solvent may be added to the mixture so that the mixture can be granulated into granules of, for example, 20 µm to 2 µm in diameter for higher moldability.

The molding temperature can be appropriately selected depending upon the kind of the resin used, but is ordinarily room temperature to 400°C. After the molding, a heat treatment may be applied to chemically stabilize the molded material.

The separator of the present invention can be produced by forming a groove for supply of an oxidizing agent gas or a fuel gas to all areas of the gas diffusion electrodes, on at least one side of the carbon composite material. A shape and size of the groove can be determined depending upon, for example, the properties required for the intended separator.

With respect to the above mixture between expanded graphite and resin, the mixture between expanded graphite and thermosetting resin can be fired in a non-oxidizing atmosphere. The firing temperature is 700-3,000°C, preferably 1,000-2,500°C in a non-oxidizing atmosphere. When the firing temperature is lower than 700°C, the resulting composite material has no electroconductivity noticeably higher than that of the molded composite material not subjected to firing. A firing temperature higher than 3,000°C invites severe exhaustion of firing furnace and is not suited for practical production.

The above groove can be formed, regardless of the resin used, by making a mold so that a groove is formed, or, by processing the carbon composite material mechanically.

The present invention is hereinafter described in more detail by way of Examples.

### Example 1

Expanded graphite (its average particle diameter was 7 µm and at least 80% of the powder total particles had particle diameters of 0.1-20 µm) and a polycarbodiimide resin were mixed in compositions shown in Table 1. The mixtures were molded at 150°C at a pressure of 100 kg/cm². To each molded material groove formation was applied to produce the separators for polymer electrolyte fuel cells, followed by measuring for density, gas permeability and groove formability. Density was measured by cutting out a sheet of 40 mm x 40 mm x 2 mm (thickness) from the separator and measuring the volume and weight of the sheet. Gas permeability was measured by cutting out a sheet of 120 mm x 120 mm x 1 mm (thickness) from the molded material and measuring the nitrogen gas permeability of the sheet according to the pressure difference method specified in JIS K 7126. Groove formability was measured by preparing a sheet of 120 mm x 120 mm x 2 mm (thickness), forming a groove of 1 mm (depth) x 5 mm (width) in the sheet by machining and observing the appearance thereof. The results are shown in Table 1.

**Table 1**

| | Example | | |
|---|---|---|---|
| | 1-1 | 1-2 | 1-3 |
| Firing temperature | No firing | | |
| Expanded graphite | 100 | 100 | 100 |

| Resin | | | |
|---|---|---|---|
| Polycarbodiimide | 10 | 100 | 1000 |
| Phenol | | | |
| Polypropylene | | | |
| Polytetrafluoroethylene | | | |
| Density | 1.2 | 1.34 | 1.5 |
| Nitrogen gas permeability (cm³cm⁻²min⁻¹atmN₂) | 1x10⁻² | 1x10⁻⁵ | 1x10⁻⁷ |
| Groove formability | Good | Good | Good |

### Example 2

The same expanded graphite as used in Example 1 and a phenolic resin were mixed in compositions shown in Table 2. The mixtures were molded at 150°C at a pressure of 100 kg/cm². The separators for polymer electrolyte fuel cells were produced using obtained molded material, and the separators were measured for density, gas permeability and groove formability in the same manners as in Example 1. The results are shown in Table 2.

**Table 2**

| | Example | | |
|---|---|---|---|
| | 2-1 | 2-2 | 2-3 |
| Firing temperature | No firing | | |
| Expanded graphite | 100 | 100 | 100 |

| Resin | | | |
|---|---|---|---|
| Polycarbodiimide | | | |
| Phenol | 10 | 100 | 1000 |
| Polypropylene | | | |
| Polytetrafluoroethylene | | | |
| Density | 1.16 | 1.29 | 1.46 |
| Nitrogen gas permeability (cm³cm⁻²min⁻¹atmN₂) | 1x10⁻² | 5x10⁻⁴ | 6x10⁻⁶ |
| Groove formability | Good | Good | Good |

### Example 3

The same expanded graphite as used in Example 1 and a polypropylene were mixed in compositions shown in Table 3. The mixtures were molded at 180°C at a pressure of 100 kg/cm². The separators for polymer electrolyte fuel cells were produced using obtained molded material, and the separators were measured for density, gas permeability and groove formability in the same manners as in Example 1. The results are shown in Table 3.

**Table 3**

| | Example | | |
|---|---|---|---|
| | 3-1 | 3-2 | 3-3 |
| Firing temperature | No firing | | |
| Expanded graphite | 100 | 100 | 100 |

| Resin | | | |
|---|---|---|---|
| Polycarbodiimide | | | |
| Phenol | | | |
| Polypropylene | 10 | 100 | 1000 |
| Polytetrafluoroethylene | | | |
| Density | 1.05 | 1.12 | 1.07 |
| Nitrogen gas permeability (cm³cm⁻²min⁻¹atmN₂) | 2x10⁻² | 2x10⁻⁴ | 2x10⁻⁷ |
| Groove formability | Good | Good | Good |

### Example 4

The same expanded graphite as used in Example 1 and a polytetrafluoroethylene were mixed in compositions shown in Table 4. The mixtures were molded at 330°C at a pressure of 100 kg/cm². The separators for polymer electrolyte fuel cells were produced using obtained molded material, and the separators were measured for density, gas permeability and groove formability in the same manners as in Example 1. The results are shown in Table 4.

**Table 4**

| | Example | | |
|---|---|---|---|
| | 4-1 | 4-2 | 4-3 |
| Firing temperature | No firing | | |
| Expanded graphite | 100 | 100 | 100 |

| Resin | | | |
|---|---|---|---|
| Polycarbodiimide | | | |
| Phenol | | | |
| Polypropylene | | | |
| Polytetrafluoroethylene | 10 | 100 | 1000 |
| Density | 1.06 | 1.11 | 1.13 |
| Nitrogen gas permeability (cm³cm⁻²min⁻¹atmN₂) | 1x10⁻³ | 2x10⁻⁵ | 2x10⁻⁷ |
| Groove formability | Good | Good | Good |

### Example 5

The composition shown in Example 1-2 (expanded graphite/polycarbodiimide = 100 parts by weight/100 parts by weight) was molded under the same conditions as in Example 1. The molded material was fired up to a temperature shown in Table 5, in an inert gas atmosphere. The separators for polymer electrolyte fuel cells were produced using obtained fired material, and the separators were measured for density, gas permeability and groove formability in the same manners as in Example 1. The results are shown in Table 5.

**Table 5**

| | Example | | |
|---|---|---|---|
| | 5-1 | 5-2 | 5-3 |
| Firing temperature(°C) | 1000 | 2000 | 2500 |
| Expanded graphite | 100 | 100 | 100 |

| Resin | | | |
|---|---|---|---|
| Polycarbodiimide | 100 | 100 | 100 |
| Phenol | | | |
| Polypropylene | | | |
| Polytetrafluoroethylene | | | |
| Density | 1.38 | 1.42 | 1.3 |
| Nitrogen gas permeability (cm³cm⁻²min⁻¹atmN₂) | 8x10⁻⁶ | 2x10⁻⁶ | 8x10⁻⁶ |
| Groove formability | Good | Good | Good |

### Comparative Example 1

Expanded graphite (its average particle diameter was 100 µm and 20% of the powder total particles had particle diameters of 0.1-20 µm) and a polycarbodiimide resin were mixed in a composition shown in Table 6. The mixture was molded at 150°C at a pressure of 100 kg/cm². The separators for polymer electrolyte fuel cells were produced using obtained molded material, and the separators were measured for density, gas permeability and groove formability in the same manners as in Example 1. The results are shown in Table 6.

### Comparative Example 2

The molded material used in Comparative 1 was fired up to 1,000°C in nitrogen gas. The separators for polymer electrolyte fuel cells were produced using obtained molded material, and the separators were measured for density, gas permeability and groove formability in the same manners as in Example 1. The results are shown in Table 6.

### Comparative Example 3

Expanded graphite (its average particle diameter was 0.5 µm and 20% of the powder total particles had particle diameters of 0.1-20 µm) and a polycarbodiimide resin were mixed in a composition shown in Table 6. The mixture was molded at 150°C at a pressure of 100 kg/cm². The separators for polymer electrolyte fuel cells were produced using the obtained molded material, and the separators were measured for density, gas permeability and groove formability in the same manners as in Example 1. The results are shown in Table 6.

**Table 6**

| | Comparative Examples | | |
|---|---|---|---|
| | 1 | 2 | 3 |
| Firing temperature(°C) | No firing | 1000 | No firing |
| Expanded graphite | 100 | 100 | 100 |
| Resin(polycarbodiimide) | 10 | 100 | 1000 |
| Density | 1.25 | 1.21 | 1.23 |
| Nitrogen gas permeability (cm³cm⁻²min⁻¹atmN₂) | 0.2 | 1 | 0.3 |
| Groove formability | Good | Good | Fragile and impossible to groove. |

### Comparative Example 4

Graphites having a density of 2.0 g/cm3 or 1.7g/cm³ were impregnated with a polycarbodiimide resin. The separators for polymer electrolyte fuel cells were produced using the graphites and the separators were measured for density, gas permeability and groove formability in the same manners as in Example 1. The results are shown in Table 7.

**Table 7**

| | Comparative Examples | |
|---|---|---|
| | 4-1 | 4-2 |
| Firing temperature(°C) | No firing | No firing |
| Density | 1.7 | 2 |
| Nitrogen gas permeability (cm³cm⁻²min⁻¹atmN₂) | 90 | 0.4 |
| Groove formability | Good | Good |

### Comparative Example 5

Grooved graphites having a density of 1.7 g/cm³ or 2.0 g/cm3 were coated with a polycarbodiimide resin and then fired at 1,500°C in a nitrogen gas atmosphere. The separators for polymer electrolyte fuel cells were produced using the grooved graphites and the separators were measured for density, gas permeability and groove formability in the same manners as in Example 1. The results are shown in Table 8.

**Table 8**

| | Comparative Examples | |
|---|---|---|
| | 5-1 | 5-2 |
| Firing temperature(°C) | 1500 | No firing |
| Density | 1.7 | 2 |
| Nitrogen gas permeability (cm³cm⁻²min⁻¹atmN₂) | 9 | 4x10⁻⁵ |
| Groove formability | Good | Good |

### Comparative Example 6

The separators for polymer electrolyte fuel cells were produced using glassy carbon having a density of 1.5/cm3 and the separators were measured for density, gas permeability and groove formability in the same manners as in Example 1. The results are shown in Table 9.

**Table 9**

| | Comparative Examples |
|---|---|
| | 6 |
| Firing temperature(°C) | No firing |
| Density | 1.5 |
| Nitrogen gas permeability (cm³cm⁻²min⁻¹atmN₂) | 1x10⁻⁷ |
| Groove formability | Groove was broken during grooving. |

### Industrial Applicability

The present invention provides a separator for polymer electrolyte fuel cells, interposed between the gas diffusion electrodes of the fuel cell and having, in at least one side, a groove for supply of an oxidizing agent or a fuel gas, which separator is made of carbon composite material comprising (a) an expanded graphite powder and (b) a thermoplastic resin or a thermosetting resin or a fired product of the thermosetting resin, and the expanded graphite powder (a) being dispersed in the component (b), wherein the expanded graphite powder has an average particle diameter of 5-12 µm and at least 80% of the total particles of the expanded graphite powder have particle diameters of 0.1-20 µm. The separator for polymer electrolyte fuel cells of the present invention is lightweight, can be grooved easily, and has a high gas barrier property.

## Claims

1. A separator for a polymer electrolyte fuel cell, interposed between gas diffusion electrodes of the fuel cell and having, in at least one side, a groove for supply of an oxidizing agent or a fuel gas, which separator is made of carbon composite material comprising (a) an expanded graphite powder and (b) a thermoplastic resin or a thermosetting resin or a fired product of the thermosetting resin, and the expanded graphite powder (a) being dispersed in the component (b), wherein the expanded graphite powder has an average particle diameter of 5-12 µm and at least 80% of the total particles of the expanded graphite powder have particle diameters of 0.1-20 µm.

2. A process for producing a separator for a polymer electrolyte fuel cell, which comprises mixing a thermosetting or thermoplastic resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C to obtain carbon composite material, and then, forming a groove for supply of an oxidizing agent or a fuel gas on at least one side of the carbon composite material.

3. A process according to Claim 2, wherein an amount ratio of the expanded graphite powder and the thermosetting or thermoplastic resin is 10-1,000 parts by weight of the resin per 100 parts by weight of the expanded graphite powder.

4. A process for producing a separator for a polymer electrolyte fuel cell, which comprises mixing a thermosetting resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C, and firing the molded material at 700-3,000°C in a non-oxidizing atmosphere to obtain carbon composite material, and then, forming a groove for supply of an oxidizing agent or a fuel gas on at least one side of the carbon composite material.

5. A process for producing a separator for a polymer electrolyte fuel cell, which comprises mixing a thermosetting resin and an expanded graphite powder, said expanded graphite powder having an average particle diameter of 5-12 µm and at least 80% of the total particles of said expanded graphite powder having particle diameters of 0.1-20 µm, molding the resulting mixture at a temperature of room temperature to 400°C to obtain a molded material, and forming a groove for supply of an oxidizing agent or a fuel gas on at least one side of the molded material, and then, firing the molded material at 700-3,000°C in a non-oxidizing atmosphere.

6. A process according to Claim 4 or 5, wherein an amount ratio of the expanded graphite powder and the thermosetting or thermoplastic resin is 10-1,000 parts by weight of the resin per 100 parts by weight of the graphite powder.

7. A process according to Claim 4 or 5, wherein the firing in a non-oxidizing atmosphere is conducted at 1,000-2,500 °C.

## Patentansprüche

1. Trennelement für eine Polymer-Elektrolyt-Brennstoffzelle, eingefügt zwischen Gasdiffusionselektroden der Brennstoffzelle, welches auf mindestens einer Seite eine Rinne für die Zufuhr eines Oxidationsmittels oder eines Brenngases aufweist, wobei das Trennelement aus Kohlenstoffkompositmaterial besteht, umfassend (a) ein expandiertes Graphitpulver und (b) ein thermoplastisches Harz oder ein wärmehärtbares Harz oder ein gebranntes Produkt des wärmehärtbaren Harzes, und das expandierte Graphitpulver (a) in der Komponente (b) dispergiert ist, wobei das expandierte Graphitpulver einen mittleren Teilchendurchmesser von 5 - 12 µm aufweist und mindestens 80 % der gesamten Teilchen des expandierten Graphitpulvers Teilchendurchmesser von 0,1 - 20 µm haben.

2. Verfahren zur Herstellung eines Trennelements für eine Polymer-Elektrolyt-Brennstoffzelle, welches das Mischen eines wärmehärtbaren oder thermoplastischen Harzes und eines expandierten Graphitpulvers, wobei das expandierte Graphitpulver einen mittleren Teilchendurchmesser von 5 - 12 µm aufweist und mindestens 80 % der gesamten Teilchen des expandierten Graphitpulvers Teilchendurchmesser von 0,1 - 20 µm aufweisen, das Formen der resultierenden Mischung bei einer Temperatur von Raumtemperatur bis 400°C unter Erhalt eines Kohlenstoffkompositmaterials und das anschließende Bilden einer Rinne für die Zufuhr eines Oxidationsmittels oder eines Brenngases auf mindestens einer Seite des Kohlenstoffkompositmaterials umfaßt.

3. Verfahren gemäß Anspruch 2, wobei das Mengenverhältnis des expandierten Graphitpulvers und des wärmehärtbaren oder thermoplastischen Harzes 10 - 1000 Gewichtsteile des Harzes pro 100 Gewichtsteile des expandierten Graphitpulvers beträgt.

4. Verfahren zur Herstellung eines Trennelements für eine Polymer-Elektrolyt-Brennstoffzelle, welches das Mischen eines wärmehärtbaren Harzes und eines expandierten Graphitpulvers, wobei das expandierte Graphitpulver einen mittleren Teilchendurchmesser von 5-12 µm aufweist und mindestens 80 % der gesamten Teilchen des expandierten Graphitpulvers Teilchendurchmesser von 0,1 - 20 µm aufweisen, das Formen der resultierenden Mi-schung bei einer Temperatur von Raumtemperatur bis 400°C und das Brennen des geformten Materials bei 700 - 3000°C in einer nicht-oxidierenden Atmosphäre unter Erhalt eines Kohlenstoffkompositmaterials und das anschließende Bilden einer Rinne für die Zufuhr eines Oxidationsmittels oder eines Brenngases auf mindestens einer Seite des Kohlenstoffkompositmaterials umfaßt.

5. Verfahren zur Herstellung eines Trennelements für eine Polymer-Elektrolyt-Brennstoffzelle, welches das Mischen eines wärmehärtbaren Harzes und eines expandierten Graphitpulvers, wobei das expandierte Graphitpulver einen mittleren Teilchendurchmesser von 5-12 µm aufweist und mindestens 80 % der gesamten Teilchen des expandierten Graphitpulvers Teilchendurchmesser von 0,1 - 20 µm aufweisen, das Formen der resultierenden Mischung bei einer Temperatur von Raumtemperatur bis 400°C unter Erhalt eines geformten Materials und das Bilden einer Rinne für die Zufuhr eines Oxidationsmittels oder eines Brenngases auf mindestens einer Seite des geformten Materials und das anschließende Brennen des geformten Materials bei 700 - 3000°C in einer nicht-oxidierenden Atmosphäre umfaßt.

6. Verfahren gemäß Anspruch 4 oder 5, wobei das Mengenverhältnis des expandierten Graphitpulvers und des wärmehärtbaren oder thermoplastischen Harzes 10 - 1000 Gewichtsteile des Harzes pro 100 Gewichtsteile des Graphitpulvers beträgt.

7. Verfahren gemäß Anspruch 4 oder 5, wobei das Brennen in einer nicht-oxidierenden Atmosphäre bei 1000 - 2500°C durchgeführt wird.

## Revendications

1. Un séparateur pour une pile à combustible à électrolyte à base de polymères, interposé entre des électrodes de diffusion gazeuse de la pile à combustible et présentant, sur au moins un côté, une rainure pour l'alimentation d'un agent oxydant ou d'un gaz combustible, lequel séparateur est réalisé en matière composite de carbone comprenant (a) une poudre de graphite expansé et (b) une résine thermoplastique ou une résine thermodurcissable ou un produit cuit de la résine thermodurcissable, et la poudre de graphite expansé (a) étant dispersée dans le composé (b), dans lequel la poudre de graphite expansé présente un diamètre moyen de particules de 5 à 12 µm et au moins 80% du total des particules de la poudre de graphite expansé présente des diamètres de particules de 0,1 à 20 µm.

2. Un procédé de fabrication d'un séparateur pour une pile à combustible à électrolyte à base de polymères, lequel comprend les opérations consistant à mélanger une résine thermodurcissable ou thermoplastique et une poudre de graphite expansé, ladite poudre de graphite expansé présentant un diamètre moyen de particules de 5 à 12 µm et au moins 80% du total des particules de ladite poudre de graphite expansé présentant des diamètres de particules de 0,1 à 20 µm, mouler le mélange résultant à une température égale la température ambiante jusqu'à 400° afin d'obtenir une matière composite de carbone et, ensuite, former une rainure pour l'alimentation d'un agent oxydant ou d'un gaz combustible sur au moins un côté de la matière composite de carbone.

3. Un procédé selon la revendication 2, dans lequel le rapport des quantités de la poudre de graphite expansé et de la résine thermodurcissable ou thermoplastique est de 10 à 1000 parties en poids de la résine pour 100 parties en poids de la poudre de graphite expansé.

4. Un procédé de fabrication d'un séparateur pour une pile à combustible à électrolyte à base de polymères, lequel comprend les opérations consistant à mélanger une résine thermodurcissable et une poudre de graphite expansé, ladite poudre de graphite expansé présentant un diamètre moyen de particules de 5 à 12 µm et au moins 80% du total des particules de ladite poudre de graphite expansé présentant des diamètres de particules de 0,1 à 20 µm, mouler le mélange résultant à une température égale à la température ambiante jusqu'à 400°C, et cuire la matière moulée à 700-3000°C dans une atmosphère non oxydante pour obtenir une matière composite de carbone et, ensuite, former une rainure pour l'alimentation d'un agent oxydant ou d'un gaz combustible sur au moins un côté de la matière composite de carbone.

5. Un procédé de fabrication d'un séparateur pour une pile à combustible à électrolyte à base de polymères, lequel comprend les opérations consistant à mélanger une résine thermodurcissable et une poudre de graphite expansé, ladite poudre de graphite expansé présentant un diamètre moyen de particules de 5 à 12 µm et au moins 80% du total des particules de ladite poudre de graphite expansé présentant des diamètres de particules de 0,1 à 20 µm, mouler le mélange résultant à une température égale à la température ambiante jusqu'à 400°C afin d'obtenir une matière moulée, et former une rainure pour l'alimentation d'un agent oxydant ou d'un gaz combustible sur au moins un côté de la matière moulée et, ensuite, cuire la matière moulée à 700-3000°C dans une atmosphère non oxydante.

6. Un procédé selon la revendication 4 ou 5, dans lequel le rapport des quantités de la poudre de graphite expansé et de la résine thermodurcissable ou thermoplastique est de 10 à 1000 parties en poids de la résine pour 100 parties en poids de la poudre de graphite.

7. Un procédé selon la revendication 4 ou 5, dans lequel la cuisson dans une atmosphère non oxydante est effectuée à 1000-2500°C.
